Europäisches Patentamt

European Patent Office

Office européen des brevets

(19)

(11) **EP 1 447 663 A1**

(12) **DEMANDE DE BREVET EUROPEEN**

(43) Date de publication:
**18.08.2004 Bulletin 2004/34**

(51) Int Cl.⁷: **G01N 30/74**

(21) Numéro de dépôt: **04290299.9**

(22) Date de dépôt: **05.02.2004**

(84) Etats contractants désignés:
**AT BE BG CH CY CZ DE DK EE ES FI FR GB GR HU IE IT LI LU MC NL PT RO SE SI SK TR**
Etats d'extension désignés:
**AL LT LV MK**

(30) Priorité: **12.02.2003 FR 0301652**

(71) Demandeur: **Sedere S.A.**
**94141 Alfortville Cedex (FR)**

(72) Inventeurs:
• **Dreux, Michel**
 **45160 Olivet (FR)**
• **Gangloff, Henry**
 **94220 Charenton le Pont (FR)**

(74) Mandataire: **Cabinet HERRBURGER**
 **115, Boulevard Haussmann**
 **75008 Paris (FR)**

(54) **Procédé de pilotage d'un détecteur évaporatif à diffusion de lumière couplé à une colonne de chromatographie en phase liquide**

(57)  Procédé permettant de piloter un détecteur évaporatif à diffusion de lumière couplé à une colonne de chromatographie en phase liquide, essentiellement indépendamment des conditions d'élution de la séparation chromatographique.

On prélève à une fréquence réglable donnée un volume calibré constant réglable donné du flux provenant de la colonne de chromatographie, ce flux étant constitué par une phase éluante renfermant des composés à analyser qui ont été dissous dans celle-ci, et on transfère le volume ainsi prélevé dans un circuit secondaire sur lequel est branché le détecteur évaporatif à diffusion de lumière en le poussant à l'aide d'une pompe auxiliaire avec un fluide porteur déterminé indépendant de la phase éluante ayant un débit prédéterminé et on mélange les créneaux successifs du flux provenant de la colonne de chromatographie avec le fluide porteur poussant ces créneaux en amont du détecteur évaporatif à diffusion de lumière.

EP 1 447 663 A1

**Description**

La présente invention concerne un procédé permettant de piloter un détecteur évaporatif à diffusion de lumière couplé à une colonne de chromatographie en phase liquide essentiellement indépendamment des conditions d'élution de la séparation chromatographique.

La chromatographie en phase liquide est largement utilisée par les analystes pour séparer différents constituants d'un mélange en vue de leur identification et/ou de leur dosage.

Son principe est basé sur la différence d'interactions de ces constituants avec une phase stationnaire remplissant la colonne de chromatographie.

Pour effectuer une séparation par chromatographie en phase liquide, on introduit le mélange à analyser en tête de colonne, puis on injecte dans celle-ci une phase mobile dite phase éluante constituée par un débit donné d'un solvant ou d'une série de solvants choisis dans un ordre d'affinité croissante pour la phase stationnaire (séparation par gradient d'élution).

On recueille par suite en queue de colonne un flux chronologique constitué par une phase éluante dans laquelle sont successivement dissous les constituants du mélange à analyser préalablement séparés.

Pour identifier et/ou doser les composés ainsi séparés, il est nécessaire de coupler à la colonne de chromatographie en phase liquide un détecteur situé en aval de celle-ci.

Or, la chromatographie en phase liquide souffre encore aujourd'hui de l'absence d'un détecteur universel d'emploi commode et de grande sensibilité.

Pour analyser les flux provenant des colonnes de chromatographie en phase liquide, les analystes utilisent classiquement comme détecteur de type universel soit le réfractomètre différentiel soit le détecteur évaporatif à diffusion de lumière.

Cependant, le réfractomètre n'est pas sensible et se montre d'une utilisation limitée à la chromatographie en mode isocratique ce qui fait qu'il n'est actuellement utilisé que lorsque les analystes n'ont pas d'autre choix.

Le détecteur évaporatif à diffusion de lumière est plus sensible que le réfractomètre et compatible avec la chromatographie en mode gradient. Il a pour avantage de permettre l'analyse de tous les composés non volatils, en particulier les cations et anions inorganiques ou organiques présents dans un échantillon, ce sans préparation de cet échantillon ni traitement chimique préalable particulier.

Un tel détecteur présente toutefois l'inconvénient de ne permettre la détection que des analytes moins volatils que la phase liquide (éluante) qui les véhicule.

De plus, dans le cas d'analytes de volatilité intermédiaire (semi volatils) il est nécessaire d'effectuer la détection à faible température d'évaporation de la phase liquide, ce qui entraîne des conditions d'analyse plus limitées, et une sensibilité réduite.

Un autre reproche fait au détecteur évaporatif à diffusion de lumière est lié à son caractère polluant, vu qu'il nécessite la volatilisation de la phase éluante, c'est-à-dire notamment de solvants organiques.

Le principe de fonctionnement d'un détecteur évaporatif à diffusion de lumière est le suivant : les composés à analyser sont transportés par une phase mobile ou un liquide porteur plus volatil qui est ensuite nébulisé puis évaporé à une température relativement faible (pouvant être de l'ordre de 30 à 40°C) de sorte que seules demeurent des micro particules résiduelles - idéalement les composés à analyser - pouvant être détectées par diffusion de lumière.

On peut ainsi analyser directement des effluents provenant de colonnes de chromatographie à la condition de choisir une phase mobile suffisamment volatile pour être directement utilisée en tant que liquide porteur au niveau du détecteur évaporatif à diffusion de lumière.

Les détecteurs évaporatifs à diffusion de lumière comportent :

- un nébuliseur associé à une chambre de nébulisation et dans lequel on introduit d'une part un échantillon constitué par un liquide porteur renfermant des composés à analyser moins volatils qui ont été dissous dans celui-ci, et d'autre part un gaz de nébulisation permettant de transformer l'échantillon en un aérosol,

- une chambre d'évaporation constituée par un tube chauffé dans laquelle on évapore le liquide porteur afin de ne conserver que des micro particules des composés à analyser, et

- une chambre de détection dans laquelle on irradie les micro particules résiduelles des composés à analyser par un rayonnement issu d'une source polychromatique ou monochromatique et on détecte la lumière diffusée dans une direction différente de celle du faisceau d'irradiation.

Lorsque le détecteur évaporatif à diffusion de lumière est couplé à une colonne de chromatographie située en amont, on obtient ainsi un chromatogramme constitué par une succession chronologique de signaux (pics) représentant idéalement chacun un composé du mélange à analyser ; la surface de ces signaux (pics) est fonction de la concentration ou de la masse de chaque composé dans l'échantillon de départ.

Si A représente la surface du signal mesurant l'intensité diffusée par une masse m ou une concentration c (m = V x c, V étant le volume injecté) de l'un des composés à analyser, ces deux valeurs sont reliées par la formule générale : $A = am^b$ ou en d'autres termes $Log\ A = b\ Log\ m + Log\ a$.

Le logarithme de la surface du signal mesurant l'intensité diffusée par un composé à analyser est donc une fonction linéaire du logarithme de la masse (ou de la concentration) de ce composé dans l'échantillon.

Pour effectuer une analyse quantitative, on trace donc préalablement une droite d'étalonnage et on lit sur celle-ci la masse ou la concentration d'un composé à analyser correspondant à l'intensité de la lumière diffusée par ce composé.

La valeur du coefficient b correspond à la pente de la droite d'étalonnage ou encore au coefficient de réponse du détecteur vis-à-vis de ce composé particulier.

La présente invention a pour objet de remédier aux inconvénients des procédés classiques d'analyse des flux provenant de colonnes de chromatographie en phase liquide au moyen d'un détecteur évaporatif à diffusion de lumière et propose à cet effet un procédé de pilotage d'un tel détecteur, permettant une détection précise et fiable d'un plus grand nombre d'analytes, essentiellement indépendamment des conditions d'élution de la séparation chromatographique, et en outre, de nature à abaisser dans une large mesure la pollution ainsi entraînée.

Selon ce procédé, on prélève à une fréquence réglable donnée, un volume calibré constant réglable donné (ou une masse calibrée constante réglable donnée) du flux provenant de la colonne de chromatographie, ce flux étant constitué par une phase éluante renfermant les composés à analyser qui ont été dissous dans celle-ci, et on transfère le volume ainsi prélevé dans un circuit secondaire sur lequel est branché le détecteur évaporatif à diffusion de lumière en le poussant à l'aide d'une pompe auxiliaire avec un fluide porteur déterminé indépendant de la phase éluante ayant un débit prédéterminé et on mélange les créneaux successifs du flux provenant de la colonne de chromatographie avec le fluide porteur poussant ces créneaux en amont du détecteur évaporatif à diffusion de lumière.

La mise en oeuvre du procédé conforme à l'invention nécessite donc d'associer au détecteur évaporatif à diffusion de lumière, en aval de la colonne de chromatographie d'une part un module de transfert des effluents constitué par une vanne de division de flux active particulière ainsi qu'une pompe auxiliaire de nature à véhiculer les effluents transférés à l'aide d'un fluide porteur dans le circuit secondaire pour lui permettre de pousser les créneaux du flux provenant de la colonne de chromatographie et d'autre part un dispositif de mélange des créneaux successifs avec le fluide porteur.

On pourrait à titre d'exemple mettre à cet effet en oeuvre une vanne de division de flux active du type de la vanne décrite dans le document US-2001 / 003807.1-A1 et commercialisée par la Société RHEODYNE.

Cette vanne qui a été conçue pour permettre le pilotage au moyen d'un spectromètre de masse d'une collection de fractions en chromatographie préparative comporte des circuits fluidiques internes permettant de raccorder sélectivement une boucle d'échantillonnage à un circuit principal ou circuit de séparation ou à un circuit secondaire ou circuit de détection.

La boucle d'échantillonnage est donc dans une première phase remplie de liquide provenant du circuit principal, puis dans une seconde phase, ce volume de liquide est transféré dans le circuit secondaire.

Toutefois, pour qu'une telle vanne puisse être utilisée en analyse quantitative, en particulier dans le cas de faibles débits, il est nécessaire de modifier ses circuits fluidiques internes de manière à garantir le transfert d'un volume de liquide constant, ce quelles que soient les caractéristiques en particulier la viscosité du liquide dans le circuit principal.

Le procédé conforme à l'invention est par suite tout particulièrement adapté à la séparation d'analytes par gradient d'élution : en effet, la proportion du flux principal provenant de la colonne de chromatographie qui est transférée dans le circuit secondaire est constante et indépendante de la nature, en particulier de la viscosité de la phase éluante mise en oeuvre dans la colonne de chromatographie.

Il est donc ainsi possible d'atténuer les variations de la réponse du détecteur évaporatif à diffusion de lumière observées classiquement et qui sont fonction de la nature de la phase éluante.

Au contraire, les vannes de division de flux classiques correspondent à des vannes passives essentiellement constituées par une tubulure en T comportant trois branches dont les diamètres et les longueurs sont déterminés en fonction du rapport de division choisi qui dépend du débit et de la viscosité de la phase mobile d'élution.

Par suite, la mise en oeuvre de telles vannes de division de flux nécessite de modifier le montage dès que l'on change d'éluant de sorte que ces vannes ne sont pas bien adaptées à la division dans un rapport constant d'un flux provenant d'une colonne de séparation d'analytes par gradient d'élution.

Compte tenu de ce qui précède, le procédé conforme à l'invention peut s'adapter à la chromatographie liquide, analytique, à la chromatographie préparative ou à faible débit, mais également à la chromatographie à contre courant et à d'autres séparations réalisées en phase liquide.

Un autre avantage particulièrement intéressant du procédé conforme à l'invention est lié à son caractère polyvalent : en effet, avec un seul montage et pour un débit donné de phase éluante au niveau de la colonne de chromatographie, il est possible d'obtenir plusieurs rapports de division différents ou encore plusieurs transferts de masse différents en faisant varier les volumes calibrés transférés dans le circuit secondaire et les fréquences de prélèvement.

Par suite et selon une autre caractéristique de l'invention, en présence de composés majoritaires et de composés minoritaires, on fait varier les volumes calibrés transférés dans le circuit secondaire et les fréquences de prélèvement en cours d'analyse.

On peut ainsi faciliter la détermination simultanée de composés de très faibles concentrations, en présence de composés à fortes concentrations, par ajustement différents des rapports de transfert de masse.

Il est en outre à noter que le procédé conforme à l'invention permet, par remélange et dilution des masses transférées d'éviter la saturation du détecteur évaporatif à diffusion de lumière, suite à un ajustement adapté du débit de fluide porteur et/ou du rapport de transfert de masse.

Pour reconstituer les pics chromatographiques au niveau du détecteur évaporatif à diffusion de lumière, il est toutefois indispensable de choisir les paramètres de transfert de sorte que le nombre de transferts correspondant à un pic donné soit suffisant pour permettre de reconstituer ce pic.

Dans le cas d'une analyse quantitative, il est dans la pratique nécessaire de disposer d'au moins huit transferts pour pouvoir reconstituer un pic ; par suite, pour un débit d'éluant donné, il est nécessaire de tenir compte de cet impératif lorsque l'on choisit la fréquence de prélèvement.

En revanche, si l'on ne recherche qu'une analyse qualitative, le nombre de transferts peut être moindre.

La possibilité pour l'analyste de choisir le débit et la composition du fluide porteur présente en outre l'avantage de permettre de diminuer considérablement la pollution inhérente au fonctionnement actuel des détecteurs évaporatifs à diffusion de lumière ; à titre d'exemple, dans le cas d'un débit de phase éluante de 1 ml par minute au niveau de la colonne de chromatographie, et d'un rapport de division de 20, un débit aussi faible que 50 µl par minute au niveau du circuit secondaire peut être utilisé, ce qui diminue également la pollution d'un facteur 20.

Il est en outre toujours possible de choisir un fluide porteur moins polluant que la phase éluante mise en oeuvre au niveau de la colonne de chromatographie.

L'avantage essentiel du procédé conforme à l'invention est toutefois lié à son indépendance presque totale des conditions d'élution de la séparation chromatographique, ce qui permet d'effectuer des analyses quantitatives qui étaient auparavant impossibles et offre en outre aux analystes la possibilité d'ajuster la réponse du détecteur évaporatif à diffusion de lumière en fonction des objectifs souhaités.

Sur ce point, il est à noter que les analystes reprochent constamment au détecteur évaporatif à diffusion de lumière de ne pas permettre des analyses suffisamment précises et fiables, ou encore de ne pas avoir une réponse linéaire, ce qui complique les dosages et restreint en outre l'emploi de tels détecteurs dans le domaine pharmaceutique : en effet, les pharmacopées recommandent des détecteurs dont la réponse est linéaire.

Pour remédier à cet inconvénient, il a déjà été proposé, conformément au document EP-1 275 961 un procédé de pilotage d'un détecteur évaporatif à diffusion de lumière consistant à régler au moins un paramètre influençant les conditions de nébulisation en amont de la chambre d'évaporation de l'aérosol de façon à fixer le coefficient de réponse du détecteur à une valeur de réglage de nature à faciliter les analyses et/ ou à augmenter leur précision et leur fiabilité.

Selon ce document antérieur, les paramètres influençant les conditions de nébulisation peuvent être la nature du gaz de nébulisation, la température de ce gaz, la température de la chambre de nébulisation et/ ou la composition du liquide porteur.

Il a en particulier été proposé d'ajouter à la phase mobile d'élution, en amont du détecteur évaporatif à diffusion de lumière, un agent modificateur à une concentration déterminée de façon à obtenir une solvatation ou une complexation des analytes de nature à faciliter les analyses et/ou à augmenter leur précision et leur fiabilité.

La littérature a d'ailleurs déjà montré quelques cas de variation importante du coefficient de réponse b d'un détecteur évaporatif à diffusion de lumière avec le débit de la phase mobile, la nature du gaz de nébulisation ou encore la nature de la phase mobile.

On a ainsi pu obtenir des valeurs du coefficient b proches de l'unité pour de faibles débits (M. Rajevic, P.J. Betto, J. Liq. Chrom. & Rel. Techn. 21(18), (1998), 2821), ou pour des micro débits avec un micro nébuliseur (S. Héron, A. Tchapla, J. Chromatogr. A, 848, (1999) 95 et Ph. D, F. Guerrero, LYON I, n° 12-95, 25 janvier 1995.).

Selon la publication Y. Mengerik, H.J.C. De Man, Sj. S. Van Der Wal, J. Chromatogr. 552, (1991) 593 l'intensité A du signal est plus importante avec l'hélium qu'avec l'azote, l'air ou le gaz carbonique.

Selon la publication F.S. Deschamps, K. Gaudin, E. Lesellier, A. Tchapla, D. Ferrier, A. Baillet, P. Chaminade, Chromatographia, 54, (2001), 607 et celle de C. Elfakir, P. Chaimbault, M. Dreux, J. Chromatogr. 829 ; (1998), 193, il est probable que certaines phases mobiles permettent de modifier la nature de certains analytes et par suite d'augmenter l'intensité du signal A et donc de rendre la détection de ces analytes plus sensible.

Toutefois, selon ces documents antérieurs, la détection au niveau du détecteur évaporatif à diffusion de lumière était obligatoirement tributaire de la phase mobile d'élution utilisée pour la séparation chromatographique tant au niveau de sa nature que de son débit.

Or, le procédé conforme à l'invention permet de remédier à cet inconvénient.

A cet effet, et selon une caractéristique préférentielle de l'invention, on choisit la nature et le débit du fluide porteur de façon à fixer le coefficient de réponse b du détecteur évaporatif à diffusion de lumière à une valeur de réglage de nature à faciliter les analyses, et/ ou à augmenter leur précision et leur fiabilité, la pente b des droites d'étalonnage étant déterminée par l'équation :

$$Log\ A = b\ Log\ m + Log\ a$$

dans laquelle A représente la surface du signal mesurant l'intensité diffusée par l'un des composés à analyser, et m la masse ou la concentration de ce composé dans l'échantillon.

Selon l'invention, la valeur de réglage peut être soit une valeur voisine de l'unité, soit une valeur aussi grande que possible.

Dans le premier cas, c'est-à-dire lorsque la pente b des droites d'étalonnage est aussi proche que possible de l'unité ou dans l'idéal égale à 1, le signal délivré par le détecteur évaporatif à diffusion de lumière est directement proportionnel à la masse ou à la concentration des composés à analyser.

Il va de soi qu'une telle linéarité directe entre l'intensité du signal délivré par l'appareil et la quantité de composés responsables de ce signal est de nature à faciliter largement les analyses et à augmenter leur précision et leur fiabilité dans un certain nombre de cas.

L'obtention d'une pente b dont la valeur est la plus grande possible est elle aussi particulièrement avantageuse : en effet, pour une variation donnée de la concentration d'un composé à analyser, l'intensité du signal délivré par l'appareil augmente d'autant plus que la pente b est grande.

Par suite, la sensibilité du dosage augmente avec la valeur de la pente b des droites d'étalonnage.

Selon l'invention, il est nécessaire de mélanger les créneaux successifs du flux provenant de la colonne de chromatographie et le fluide porteur poussant ces créneaux en amont du détecteur évaporatif à diffusion de lumière.

Un tel mélange est en effet obligatoire pour produire des analyses reproductibles et un pilotage satisfaisant de la réponse du détecteur.

Ce mélange ne doit toutefois pas entraîner un élargissement trop important des créneaux, pour ne pas limiter l'analyse de mélanges complexes ou augmenter la limite de détection.

Par suite, le débit du fluide porteur ne peut pas être quelconque, c'est-à-dire qu'il doit être ni trop grand (plusieurs millilitres par minute) ni trop faible (quelques micro litres par minute).

La nécessité d'un tel mélange oblige à incorporer dans le circuit secondaire entre la vanne de division de flux et le détecteur évaporatif à diffusion de lumière un dispositif de mélange particulier pouvant à titre d'exemple être constitué par un fritté ou une chambre de mélange de très faible volume mort.

Suite à la mise en oeuvre d'une vanne de division de flux active, d'une pompe auxiliaire et d'un dispositif de mélange, le procédé conforme à l'invention permet non seulement de maîtriser le coefficient de réponse b d'un détecteur évaporatif à diffusion de lumière, mais offre en outre l'avantage de permettre de généraliser l'utilisation d'un tel détecteur en transformant automatiquement des molécules volatiles en espèces moins volatiles comme suggéré par D. L. Ford et W. Kennard J. Oil Colour Chem. Ass. 49, (1966), 607 dans la première publication décrivant ce type de détection.

En effet, et grâce à un choix judicieux du fluide porteur délivré par la pompe auxiliaire, il est ainsi possible de réaliser en ligne, sur le circuit secondaire, la transformation par solvatation ou complexation d'analytes volatils en espèces moins volatiles.

Selon une autre caractéristique de l'invention on branche une colonne de chromatographie auxiliaire sur le circuit secondaire, en amont du détecteur évaporatif à diffusion de lumière.

Cette caractéristique permet d'enchaîner sur la première séparation une seconde séparation totalement indépendante de la première lorsque les différents constituants du mélange à analyser n'ont pas été suffisamment séparés au niveau de la première colonne de chromatographie.

Une telle seconde séparation est rendue possible par l'utilisation de phases stationnaires compactes du type monolithes pouvant travailler efficacement, même à faible pression ce que requiert notamment le principe des transferts au moyen de la vanne utilisée dans le montage.

**Revendications**

1. Procédé permettant de piloter un détecteur évaporatif à diffusion de lumière couplé à une colonne de chromatographie en phase liquide, essentiellement indépendamment des conditions d'élution de la séparation chromatographique,
   **caractérisé en ce que**
   l'on prélève à une fréquence réglable donnée un volume calibré constant réglable donné du flux provenant de la colonne de chromatographie, ce flux étant constitué par une phase éluante renfermant des composés à analyser qui ont été dissous dans celle-ci, et on transfère le volume ainsi prélevé dans un circuit secondaire sur lequel est branché le détecteur évaporatif à diffusion de lumière en le poussant à l'aide d'une pompe auxiliaire avec un fluide porteur déterminé indépendant de la phase éluante ayant un débit prédéterminé et on mélange les créneaux successifs du flux provenant de la colonne de chromatographie avec le fluide porteur poussant ces créneaux en amont du détecteur évaporatif à diffusion de lumière.

2. Procédé selon la revendication 1,
   **caractérisé en ce qu'**
   on le met en oeuvre pour piloter un détecteur évaporatif à diffusion de lumière couplé à une colonne de chromatographie en phase liquide dans le cadre d'une séparation par gradient d'élution de façon à atténuer les variations de la réponse du détecteur évaporatif à diffusion de lumière en fonction de la nature de la phase éluante.

**3.** Procédé selon l'une quelconque des revendications 1 et 2,
**caractérisé en ce qu'**
en présence de composés majoritaires et de composés minoritaires on fait varier les volumes calibrés transférés dans le circuit secondaire et la fréquence de prélèvement en cours d'analyse.

**4.** Procédé selon l'une quelconque des revendications 1 à 3,
**caractérisé en ce que**
l'on choisit la nature et le débit du fluide porteur de façon à fixer le coefficient de réponse (b) du détecteur évaporatif à diffusion de lumière à une valeur de réglage de nature à faciliter les analyses, et/ou à augmenter leur précision et leur fiabilité, la pente (b) des droites d'étalonnage étant déterminée par l'équation :

$$Log\ A = b\ Log\ m + Log\ a$$

dans laquelle A représente la surface du signal mesurant l'intensité diffusée par l'un des composés à analyser et m la masse ou la concentration de ce composé dans l'échantillon.

**5.** Procédé selon l'une quelconque des revendications 1 à 4,
**caractérisé en ce que**
la valeur de réglage est une valeur voisine de l'unité.

**6.** Procédé selon l'une quelconque des revendications 1 à 4,
**caractérisé en ce que**
la valeur de réglage est la valeur maximum possible.

**7.** Procédé selon l'une quelconque des revendications 1 à 6,
**caractérisé en ce que**
on branche une colonne de chromatographie auxiliaire sur le circuit secondaire, en amont du détecteur évaporatif à diffusion de lumière.

EP 1 447 663 A1

| | Office européen des brevets | **RAPPORT DE RECHERCHE EUROPEENNE** | Numéro de la demande EP 04 29 0299 |

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | US 6 077 438 A (KASSEL DANIEL B ET AL) 20 juin 2000 (2000-06-20) * abrégé * | 1 | G01N30/74 |
| A | US 2002/072126 A1 (CHERVET JEAN-PIERRE ET AL) 13 juin 2002 (2002-06-13) * abrégé * | 1 | |
| A,D | US 2001/038071 A1 (FOSTER MARC D ET AL) 8 novembre 2001 (2001-11-08) * abrégé * | 1 | |
| A,D | EP 1 275 961 A (UNIV PARIS 11 IUT D ORSAY ;SEDERE S A (FR); UNIV ORLEANS (FR)) 15 janvier 2003 (2003-01-15) * abrégé * | 1 | |
| A | US 6 402 946 B1 (HOFMANN MARTIN ET AL) 11 juin 2002 (2002-06-11) * abrégé * | 1 | |

| | | | DOMAINES TECHNIQUES RECHERCHES (Int.Cl.7) |
| | | | G01N |

Le présent rapport a été établi pour toutes les revendications

| Lieu de la recherche LA HAYE | Date d'achèvement de la recherche 31 mars 2004 | Examinateur Zinngrebe, U |

## ANNEXE AU RAPPORT DE RECHERCHE EUROPEENNE
## RELATIF A LA DEMANDE DE BREVET EUROPEEN NO.

EP 04 29 0299

La présente annexe indique les membres de la famille de brevets relatifs aux documents brevets cités dans le rapport de recherche européenne visé ci–dessus.
Lesdits members sont contenus au fichier informatique de l'Office européen des brevets à la date du
Les renseignements fournis sont donnés à titre indicatif et n'engagent pas la responsabilité de l'Office européen des brevets.

31–03–2004

| Document brevet cité au rapport de recherche | | Date de publication | Membre(s) de la famille de brevet(s) | | Date de publication |
|---|---|---|---|---|---|
| US 6077438 | A | 20–06–2000 | AU | 2204600 A | 12–07–2000 |
| | | | CA | 2356218 A1 | 29–06–2000 |
| | | | EP | 1144068 A1 | 17–10–2001 |
| | | | JP | 2002537543 T | 05–11–2002 |
| | | | WO | 0037157 A1 | 29–06–2000 |
| | | | US | 6210571 B1 | 03–04–2001 |
| | | | US | 6426006 B1 | 30–07–2002 |
| US 2002072126 | A1 | 13–06–2002 | AU | 9498601 A | 15–04–2002 |
| | | | CA | 2424571 A1 | 11–04–2002 |
| | | | EP | 1325322 A2 | 09–07–2003 |
| | | | WO | 0229399 A2 | 11–04–2002 |
| US 2001038071 | A1 | 08–11–2001 | AUCUN | | |
| EP 1275961 | A | 15–01–2003 | FR | 2827385 A1 | 17–01–2003 |
| | | | EP | 1275961 A1 | 15–01–2003 |
| | | | US | 2003086092 A1 | 08–05–2003 |
| US 6402946 | B1 | 11–06–2002 | AUCUN | | |

EPO FORM P0460

Pour tout renseignement concernant cette annexe : voir Journal Officiel de l'Office européen des brevets, No.12/82